(19) **Europäisches Patentamt / European Patent Office / Office européen des brevets**

(11) **EP 1 959 225 A1**

(12) **EUROPEAN PATENT APPLICATION**
published in accordance with Art. 158(3) EPC

(43) Date of publication:
**20.08.2008 Bulletin 2008/34**

(51) Int Cl.:
***G01B 5/20*** *(2006.01)*

(21) Application number: **06834259.1**

(22) Date of filing: **01.12.2006**

(86) International application number:
**PCT/JP2006/324504**

(87) International publication number:
**WO 2007/066746 (14.06.2007 Gazette 2007/24)**

(84) Designated Contracting States:
**DE GB**

(30) Priority: **05.12.2005 JP 2005351295**

(71) Applicant: **TOKYO SEIMITSU CO., LTD.**
**Mitaka-shi**
**Tokyo 181-8515 (JP)**

(72) Inventors:
• **ENOMOTO, Masato**
**Mitaka-shi, Tokyo 181-8515 (JP)**

• **SAWAFUJI, Susumu**
**Mitaka-shi, Tokyo 181-8515 (JP)**

(74) Representative: **Skone James, Robert Edmund**
**Gill Jennings & Every LLP**
**Broadgate House**
**7 Eldon Street**
**London EC2M 7LH (GB)**

(54) **CIRCULARITY MEASURING DEVICE AND TIP END MEMBER QUALITY JUDGING METHOD**

(57)     To realize a roundness measuring instrument of which the measurement precision when there is eccentricity has been improved. The instrument comprises a mount base 1, a tip head 11 having a spherical tip portion and capable of moving in a first plane including an axis of rotation of the mount base, which comes into contact with the surface of an object to be measured and moves, a measurement probe 12-14 that detects the displacement of the tip head and outputs measurement data, and a processing controller 15 that processes the measurement data, wherein the processing controller calculates a roundness by correcting a shift of the contact position of the surface of the object to be measured and the tip head in the first plane due to eccentricity between the center of the object to be measured and the center of rotation of the mount base, and further, the processing controller calculates a roundness by calculating a shift due to eccentricity of the contact position in a direction perpendicular to the first plane and also correcting a shift of the contact position due to the calculated shift in the first plane.

FIG.5

EP 1 959 225 A1

**Description**

TECHNICAL FIELD

The present invention relates to a roundness measuring instrument and a method of determining the quality of a tip head used therein, and more specifically, to a roundness measuring instrument for calculating a roundness by correcting eccentricity, which is a shift of a center axis of work from an axis of rotation, and a method of determining the quality of a tip head by making use of the eccentricity.

BACKGROUND OF INVENTION

A roundness measuring instrument measures an outer shape of a circular section by mounting an object to be measured (work) having a circular section, such as a cylindrical object, on a rotatable mount base, causing a tip head to come into contact with the surface of the work, and measuring and detecting a displacement of the tip head accompanying the rotation of the work.

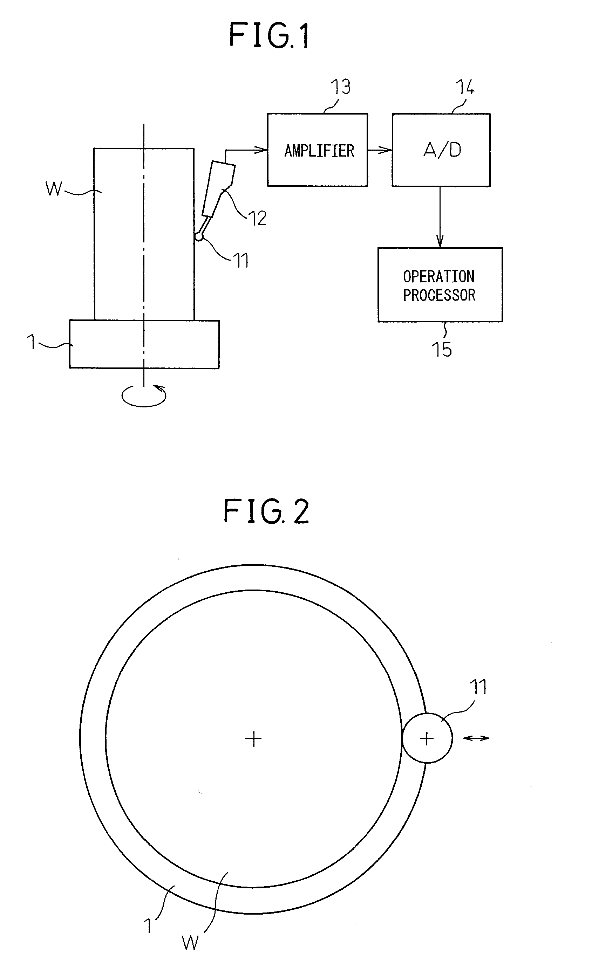

Fig. 1 is a diagram showing a basic configuration of a roundness measuring instrument. As shown schematically, the roundness measuring instrument has a rotatable mount base 1 that mounts and rotates work W, a tip head 11 that comes into contact with the surface of work W that rotates, a measuring probe 12 that measures a displacement of tip head 11, an amplifier 13 that amplifies a measurement signal output from measuring probe 12, an analog/digital converter (A/D converter) 14 that converts an amplified detection signal into a digital signal, and an operation processor 15 that calculates a roundness by processing a digital measurement signal (measurement data) output from A/D converter 14. The following explanation is given on the assumption that work W is a cylindrical object.

Tip head 11 has a spherical tip portion and is capable of moving in a first plane parallel to an axis of rotation of mount base 1, comes into contact with the surface of work W, and moves in accordance with the rotation of an object to be measured. Measuring probe 12 supports tip head 11 and outputs a measurement signal by detecting a displacement of tip head 11 using a differential transformer. Operation processor 15 is configured by a computer, etc. It is assumed that amplifier 13 and A/D converter 14 are provided inside measuring probe 12.

Fig. 2 shows how spherical tip head 11 comes into contact with work W mounted on mount base 1. When work W rotates, tip head 11 moves in accordance with the radius of the surface of work W. Because the basic configuration of a roundness measuring instrument is widely known from, for example, patent documents 1 to 3 etc., a more detailed explanation is omitted hereafter.

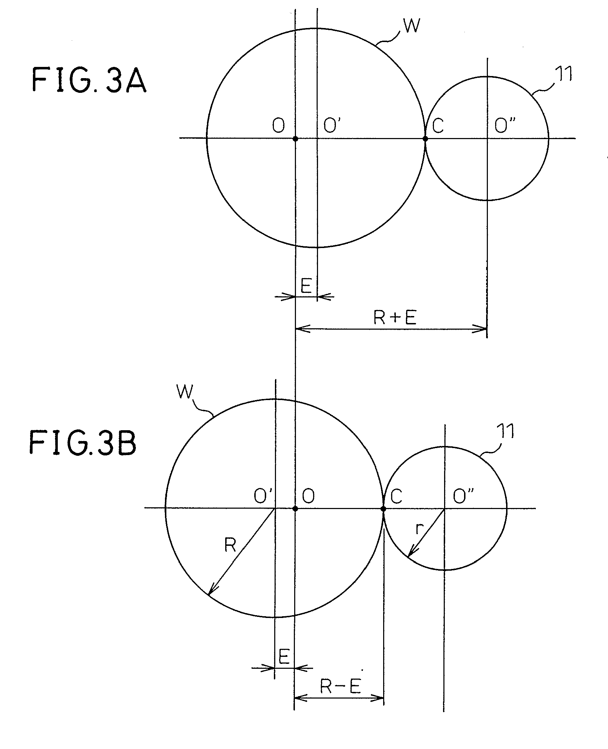

As shown in Fig. 2, when the center of work W coincides with the center of rotation of mount base 1, the range in which tip head 11 moves is small. However, as shown in Fig. 3A and Fig. 3B, if a center 0' of work W does not coincide with a center of rotation 0 of mount base 1, i.e., if there is eccentricity, when center 0' of work W is located to the right side of center of rotation 0, a center O'' of the sphere of tip head 11 (hereinafter, this sphere is referred to simply as a tip head) moves to the right excessively by an amount of eccentricity, and when center 0' of work W is located to the left side of center of rotation 0, center O'' of tip head 11 moves to the left excessively by an amount of eccentricity E. In other words, if it is assumed that the radius of work W is R, the radius of tip head 11 is r, and the amount of eccentricity is E, when center 0' of work W is located to the right side of center of rotation 0, the distance between center of rotation 0 and center O'' of tip head 11 is R+E, and when center O' of work W is located to the left side of center of rotation 0, the distance between center of rotation 0 and center O'' of tip head 11 is R-E. As a result, a difference between measurement signals is 2E.

Amplifier 13 amplifies a measurement signal so that the variation range of the measurement signal corresponds to the range of an input signal of A/D converter 14. Consequently, in accordance with the amplification rate of amplifier 13, the range of the measurement signal that can be measured, that is, the measurement range is determined. The resolution of A/D converter 14 is defined by the number of bits, and therefore, when the range of the measurement signal output from measuring probe 12 is large, the amount of displacement corresponding to the minimum resolution becomes large and the resolution is reduced. Because of this, for a high-precision measurement, it is necessary to reduce the variation range of the measurement signal to narrow the measurement range.

As described above, when there is eccentricity, the variation range of the measurement signal is enlarged by two times amount of eccentricity E, and therefore, for a high-precision measurement, an adjustment is made so that center O' of work W coincides with center of rotation 0 as exactly as possible, i.e., amount of eccentricity E is as small as possible. Patent documents 1 to 3 describe a method of easily making a centering adjustment to make amount of eccentricity E as small as possible, a method of accurately calculating an axial center, etc. However, the centering adjustment is a task/operation that requires time and there used to be a problem that the throughput of measurement is reduced.

Recently, thanks to the development of electronic devices and operation processing devices that execute software, a configuration having a high resolution and capable of measurement in a wide measurement range can be realized at a low cost. Because of this, when a change in measurement signal (measurement data) due to amount of eccentricity E as shown in Fig. 3A and Fig. 3B is detected, the roundness is calculated after amount of eccentricity E is calculated automatically and then the change due to amount of eccentricity E is removed from the measurement data. Due to this, it is made possible to make a high-precision measurement without the need of the above complicated centering operation.

Patent document 1: Japanese Unexamined Patent Publication (Kokai) No.4-329306

Patent document 2: Japanese Unexamined Patent Publication (Kokai) No.2001-91244

Patent document 3: Japanese Unexamined Patent Publication (Kokai) No.2004-93529

DISCLOSURE OF THE INVENTION

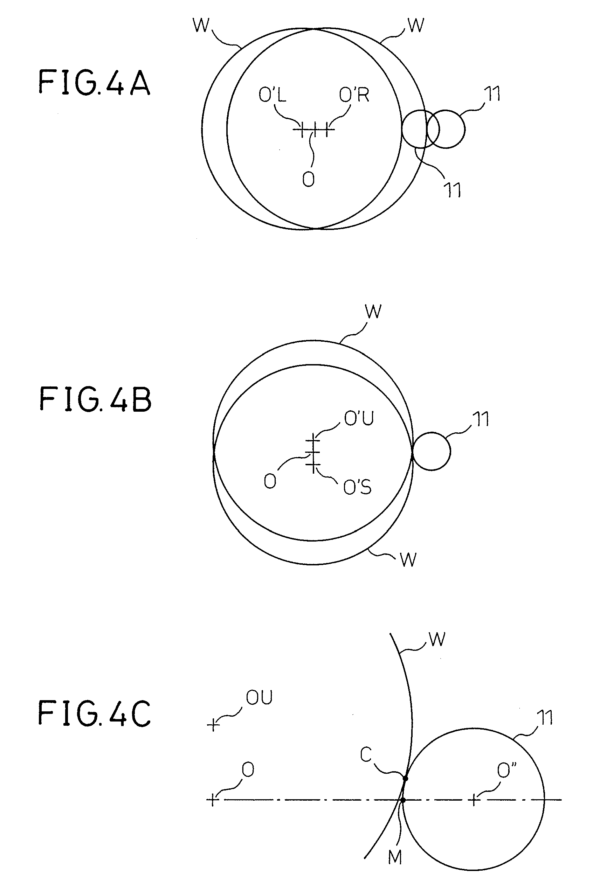

However, the correction of the amount of eccentricity in the conventional roundness measuring instrument is carried out on the assumption that a contact position C of work W and tip head 11 shown in Fig. 3A and Fig. 3B is on a line that connects center of rotation O and center O" of tip head 11, in other words, it is in a plane in which the tip head can change its position. In the case where there is eccentricity, as shown in Fig. 4A, when center 0' of work W is located to the right side of center of rotation O (O'R) and located to the left side thereof (O'L), contact position C of work W and tip head 11 is on a straight line that connects center of rotation 0 and center O" of tip head 11; however, as shown in Fig. 4B, when center 0' of work W is located on the upper side of center of rotation 0 (O'U) and located on the lower side thereof (O'S), contact position C of work W and pointer 11 is not on the straight line that connects center of rotation O and center O" of tip head 11, but located as shown in Fig. 4C. At this time, a value of tip head 11 corresponding to the surface position of the straight line that connects O and O" is output as measurement data. Because of this, the measurement signal has a value shifted by an error from the value corresponding to radius R of work W from center of rotation O; however, such a correction is not carried out conventionally.

The reason that such a correction is not carried out is that when the magnitude of the amount of eccentricity that can be dealt with by the resolution of A/D converter 14 is taken into consideration, an error P produced by such an amount of eccentricity is considered to be small and ignorable compared to the resolution.

However, recently, the progress of electronic devices and operation processing devices that execute software is remarkable and even inexpensive A/D converter 14 can realize a resolution of 16 bits. Because of this, it is possible to make a high-precision measurement even if there is an amount of eccentricity, which cannot be made with a high precision hitherto, and in accordance with this, such an error as shown in Fig. 4C that has been ignored conventionally cannot be ignored any more and a problem arises that a measurement with a sufficient precision cannot be made.

In addition, tip head 11 is made of a very hard material, such as a steel ball, ultrahard alloy ball, and ruby ball, and a measurement is made on the assumption that it has a completely round shape. However, even if it is made of a hard material, it wears down and changes in shape as it is used and the shape of tip head 11 will deform from a complete roundness. Even if the shape of tip head 11 deforms measurement data is not affected if there is not eccentricity. Therefore, an influence by the deformation of the tip head has not been considered in the prior art. However, as described above, when it is possible to make a high-precision measurement of a roundness in a state where there is eccentricity, the change in shape of tip head 11 will affect the measurement data. Because of this, it is necessary to determine whether tip head 11 can be used by monitoring the change in shape thereof. However, there has been no appropriate method for easily measuring the change in shape of tip head 11.

The present invention can solve the above problem and a first object thereof is to realize a roundness measuring instrument that has further improved the precision of measurement when there is eccentricity. A second object thereof is to make it possible to easily measure the change in shape of a tip head.

In order to realize the above first object, a roundness measuring instrument according to a first aspect of the present invention makes a correction in consideration of the influence on a measurement signal by an amount of shift due to eccentricity of a contact position of work and a tip head in a direction perpendicular to a plane in which the tip head can move.

In other words, the roundness measuring instrument according to the first aspect of the present invention is characterized by comprising a mount base that mounts and rotates an object to be measured having a circular section, a tip head having a spherical tip portion and capable of moving in a first plane parallel to an axis of rotation of the mount base, which comes into contact with the surface of the object to be measured mounted on the mount base and moves in accordance with the rotation of the object to be measured, a measuring probe that detects a displacement of the tip head and outputs measurement data, and a processing controller that calculate a roundness of the object to be measured by processing the measurement data, wherein the processing controller calculates the roundness of the object to be measured by correcting a shift due to eccentricity of the contact position of the surface of the object to be measured and the tip head in the first plane, which is a difference between the center of the circular section of the object to be measured and the center of rotation of the mount base, and wherein the processing controller calculates the roundness of the object to be measured by calculating a shift due to eccentricity of the contact position of the surface of the object to be measured and the tip head in a direction perpendicular to the first plane and further correcting a shift in the first plane due to the calculated shift in the direction perpendicular to the first plane.

According to the roundness measuring instrument in the first aspect of the present invention, the shift due to eccentricity of the contact position of the work and the tip head in the direction perpendicular to the plane in which the tip head can move is calculated and the influence thereof on the measurement signal is further calculated and corrected, and therefore, measurement precision is further improved.

In order to realize the above second object, in a method of determining the quality of a tip head according to a second aspect of the present invention, the outer shape of a reference object to be measured the shape of which is already known is measured in a state where there is eccentricity with respect to the center of rotation and in a state where there is no eccentricity, the degree of deformation of the tip head is detected from the difference between two pieces of measurement data, and thus the quality of the tip head is determined.

In other words, the method of determining the quality of a tip head according to the second aspect of the present invention is a method of determining the quality of the shape of a spherical tip portion of a tip head that comes into contact with the surface of an object to be measured in a roundness measuring instrument, and is characterized by measuring the outer shape of a reference object to be measured without eccentricity the shape of which is already known in a state where the reference object to be measured is mounted so that the center of a circular section of the reference object to be measured coincides with the center of rotation of a mount base; measuring the outer shape of the reference object to be measured with eccentricity in a state where the center of the circular section of the reference object to be measured is made eccentric from the center of rotation of the mount base by a predetermined amount; calculating an amount of deformation of the tip head from a complete spherical form from a difference between the outer shape without eccentricity and the outer shape with eccentricity; and determining that the tip head is defective when the calculated amount of deformation is beyond a predetermined range.

When the center of the object to be measured coincides with the center of rotation, even if a measurement is made using a deformed tip head, the deformation of the tip head will not affect the measurement data. In contrast to this, when the center of the object to be measured is eccentric with respect to the center of rotation, if a measurement is made using a deformed tip head, the measurement data will be affected. Because of this, if the outer shape of a reference object to be measured the shape of which is already known is measured in a state where there is no eccentricity and in a state where there is eccentricity, there is produced a difference between two pieces of measurement data. As a result, the degree of deformation of the tip head can be measured from the difference between the two pieces of measurement data.

According to the present invention, the measurement precision in the case where there is eccentricity is improved and a high-precision measurement can be made even when there is eccentricity, and therefore, it is no longer necessary to adjust eccentricity and the operability and throughput of the roundness measuring instrument are improved.

BRIEF DESCRIPTION OF THE DRAWINGS

Fig. 1 is a diagram showing an outer appearance of a surface roughness/shape measuring instrument.
Fig. 2 is a diagram showing operations of a tip head with respect to work on a mount base.
Fig. 3A and Fig. 3B are diagrams explaining a correction method in a conventional example, in which the center of the work shifts (becomes eccentric) from the center of rotation.
Fig. 4A to Fig. 4C are diagrams explaining problems of eccentricity correction in the conventional example.
Fig. 5 is a diagram explaining eccentricity correction processing in a first embodiment of the present invention.
Fig. 6 is a diagram explaining the eccentricity correction processing in the first embodiment of the present invention.
Fig. 7 is a diagram explaining another method of calculating an amount of eccentricity.
Fig. 8A and Fig. 8B are diagrams explaining the principle for calculating an amount of wear of a tip head in a second embodiment of the present invention.
Fig. 9 is a flowchart showing quality determination processing of a tip head in the second embodiment.

| | |
|---|---|
| 10 | mount base |
| 11 | tip head |
| 12 | measuring probe |
| 14 | A/D converter |
| 15 | operation processor |
| W | work |

PREFERRED EMBODIMENTS OF THE PRESENT INVENTION

A roundness measuring instrument in an embodiment of the present invention is explained below. The roundness measuring instrument in the embodiment has a basic configuration similar to that of the conventional roundness measuring instrument shown in Fig. 1, but only correction processing in operation processor 15 is different. In other words, software that causes a computer constituting operation processor 15 to operate is different. The content of the correction processing is explained below.

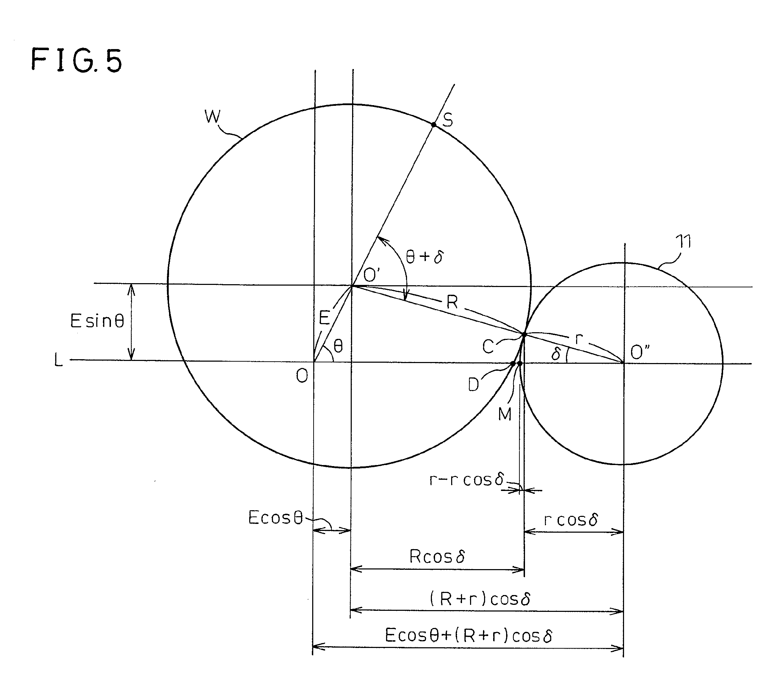

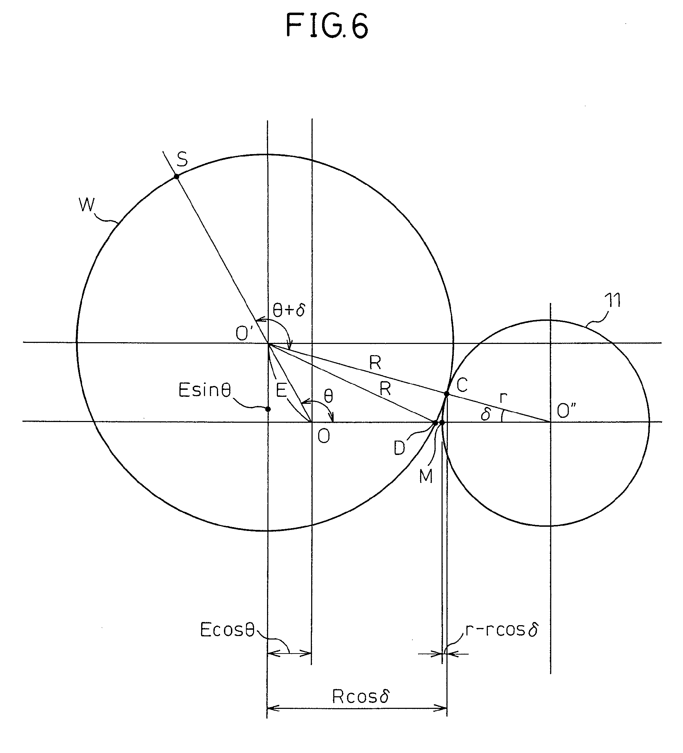

Fig. 5 and Fig. 6 are diagrams for explaining correction processing in a roundness measuring instrument in a first embodiment of the present invention.

First, in the correction processing in the first embodiment, radius R of work W, radius r of tip head 11, and amount of eccentricity E are used. For radius R of work W and radius r of tip head 11, already known values are used, however, for radius R of work W, it is also possible to use a value that is calculated in a simple manner from a measured value. As explained in Fig. 3A, Fig. 3B, and Fig. 4A, when the center of work W is eccentric from the center of rotation, plotting measurement signals will describe substantially an ellipse, wherein the length of the minor axis is substantially the same as the diameter of work W. Radius R of work W is a value of tens of mm or greater and its detection precision is 1 μm or less, and the value of radius R to be input here needs not to have so high a precision. This also applies to radius r of tip head 11.

As explained in Fig. 3A, Fig. 3B, and Fig. 4A, amount of eccentricity E can be simply calculated from the difference between the maximum value and the minimum value of the displacement signal. In the case where the maximum value and the minimum value of the displacement signal are not on the positions of rotation 180 degrees different from each other, it is also possible to further find a direction perpendicular to the direction in which the displacement signal has the same value, i.e., the direction in which the displacement signal takes the maximum value and the minimum value and calculate amount of eccentricity E from the values in the four directions. Either way, the precision of the maximum value of amount of eccentricity E is sufficient if it is calculated by such a method.

Fig. 5 and Fig. 6 show a case wherein center 0' of work W rotates about center of rotation 0 on the assumption that center of rotation 0 is the origin and center 0'' of tip head 11 is supported movably on an X axis, wherein its starting point is shown when 0' is on the line that connects 0 and O''. Fig. 5 shows a case where center O' is in the first quadrant and Fig. 6 shows a case where center 0' is in the second quadrant. In Fig. 5 and Fig. 6, C denotes the contact position of work W and tip head 11 and M denotes a point on the line that connects center of rotation 0 and center O" of tip head 11, and M is detected as the position of the tip head.

As shown in Fig. 5, it is assumed that mount base 1 is rotated by θ (0<θ<90°). If δ is assumed to be an angle formed by the line that connects center 0' of work W and center O'' of tip head 11 and the line (X axis) that connects center of rotation 0 and center O'' of tip head 11, then δ is expressed by expression (1).

$$\delta = \sin^{-1} (E \sin \theta / (R + r)) \qquad (1)$$

The output of the measuring probe (that is, the position of M of the tip head) is expressed by expression (2).

$$M = R \cos \delta - (r - r \cos \delta) + E \cos \theta \qquad (2)$$

Position C in actual contact is expressed by the following expression (3).

$$C = M + (r - r \cos \delta) = R \cos \delta + E \cos \theta \qquad (3)$$

Position C at this time is located at the rotation angle θ+δ from a measurement start point S.

Expressions (1) to (3) hold in the case of Fig. 6, and also in the case where center O' is located in the third quadrant and the fourth quadrant. However, it is assumed that δ is negative when located below X axis.

In the manner described above, a measurement value of contact position C at the rotation angle of θ+δ of work W is obtained.

Generally, in a roundness measuring instrument, the rotation angle about the center of rotation of work W is divided into uniform pitches and then measurement data is taken in evenly. However, in the case where there is eccentricity, when the angle of measurement start point S is assumed to be zero, while the rotation angle about center of rotation 0 is θ, the angle formed by the line that connects contact position C and center 0' of the work and the line that connects center O' and S is θ+δ, and therefore, measurement data is that at uneven pitches on the circumference of the work. Because of this, a value that corresponds to an even pitch on the circumference is obtained by interpolation using the measurement data at uneven pitches. Then, the roundness is calculated based on the measurement data at even pitches on the circumference obtained in this manner. Interpolation processing for converting the measurement values at uneven pitches into measurement data at even pitches is carried out conventionally, and therefore, a more detailed explanation is omitted hereafter.

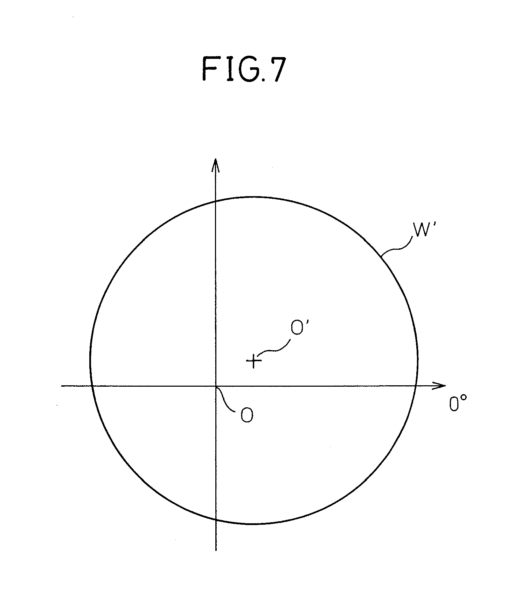

In the first embodiment, the amount of eccentricity E is calculated from the maximum value and the minimum value of the measurement data shown in Fig. 3A and Fig. 3B or the measurement data in the direction perpendicular thereto. However, it is also possible to plot the measurement data on the entire circumference of work W in a rectangular coordinate system and obtain a distance between center 0' of the work, which is the position of center of gravity of an obtained shape W', and center of rotation 0 as amount of eccentricity E. When work W is elliptic, it is not possible to obtain an accurate amount of eccentricity if it is calculated by the method in the first embodiment. Further, when work W is a polygon having an odd number of sides, such as a triangle of cooked rice, there may be a case where it is regarded that there is eccentricity even if the center of rotation coincides with the center of the work. If the method shown in Fig. 7 is used, such a problem will not arise.

It is also possible to determine an amount of abnormality in shape (difference from complete roundness) of an object to be measured from the difference in diameter between the inscribed circle and the circumscribed circle of the shape measured in Fig. 7.

When the amount of abnormality in shape is equal to or less than a fixed amount, it is proper to calculate the amount of eccentricity and the direction of eccentricity using the method in the first embodiment. However, when the amount of abnormality in shape exceeds the fixed amount, it is proper to calculate the amount of eccentricity and the direction of eccentricity using the method explained in Fig. 7.

Tip head 11 is made of a very hard material, such as a steel ball, ultrahard alloy ball, and ruby ball. In the roundness measuring instrument in the first embodiment, a measurement is made on the assumption that the tip head is completely circular; however, even if made of a hard material, it wears down as it is used, changes its shape, and deforms from complete roundness. In the case where work W is cylindrical (or spherical), when center 0' of work W coincides with center of rotation 0 (not eccentric), even if the tip head wears down, the contact point with work W is always the same, and therefore, the measurement signal is not affected, however, when center 0' of work W does not coincide with center of rotation O (eccentric), the contact point between work W and tip head 11 shifts, and therefore, the measurement signal is affected by the change in shape of the tip head from complete roundness.

In the second embodiment, the degree of change in shape of the tip head from complete roundness is detected and whether it is in a state of capable of being used is determined.

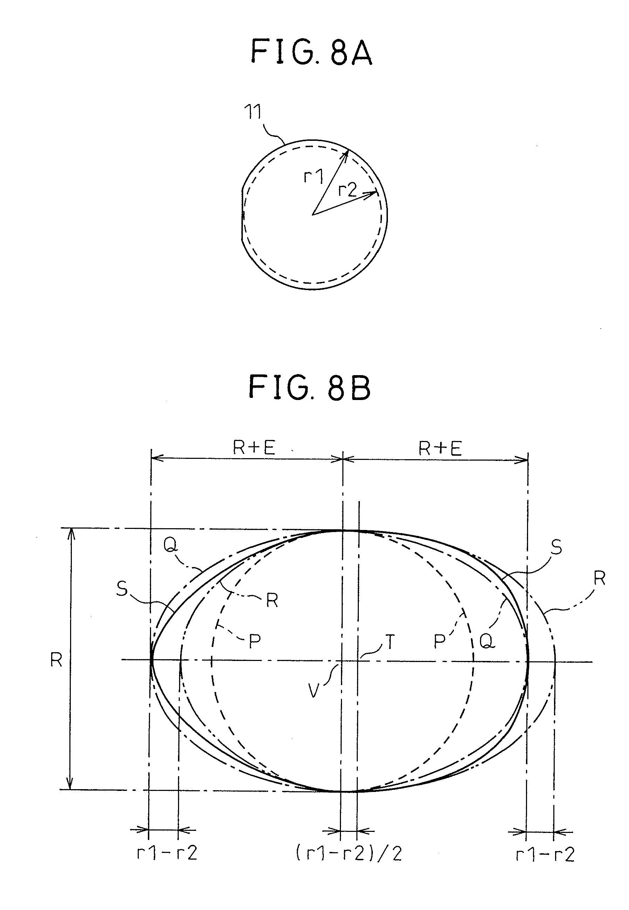

Fig. 8A and Fig. 8B are diagrams explaining the principle of detecting the degree of change in shape of the tip head from complete roundness in the second embodiment. As shown in Fig. 8A, a case is considered, in which tip head 11 that originally has a radius r1 has worn down and as a result, a circle including a portion at which tip head 11 comes into contact with work (when not eccentric) has a radius r2. When a measurement is made using tip head 11 as shown in Fig. 8A in a state where the center of reference work having a complete round shape coincides with the center of rotation, a circular locus denoted by P is obtained in Fig. 8B. Next, when a measurement is made in a state where the center of the reference work deviates from the center of rotation by a predetermined amount, i.e., in an eccentric state, a locus having an egg-like shape denoted by S is obtained in Fig. 8B. In Fig. 8A and Fig. 8B, Q denotes a locus when eccentric work is measured using the tip head having radius r2 and R denotes a locus when the eccentric work is measured using the tip head having radius r1 (correction of center position is not carried out).

In locus S, a position T in the horizontal direction at which the maximum diameter in the direction of the minor axis is R shifts by (r1 - r2) / 2 with respect to a middle position V of the diameter in the direction of the major axis. V is the center of the circle of locus P and the center of the ellipse of locus Q and T is the center of the ellipse of locus R. Because of this, if the difference between positions T and V is calculated, (r1 - r2) / 2, that is an amount corresponding to an amount of wear r1 - r2, is obtained. Consequently, a limit value is set in advance to the amount of wear r1 - r2 and if the limit value is exceeded, it is determined that the tip head cannot be used.

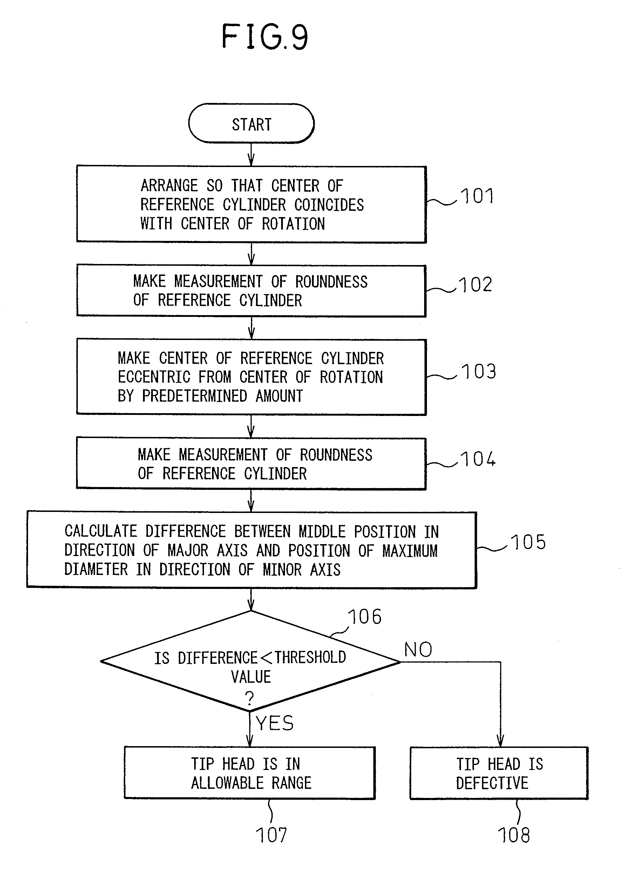

Fig. 9 is a flow chart showing the measuring processing in the second embodiment.

In step S101, a reference cylinder (or sphere) the outline shape and roundness of which are already known is arranged on a mount base and the position of the mount base is adjusted so that the center of the reference cylinder coincides with the center of rotation. This adjustment operation is carried out by the use of a moving mechanism provided to the mount base so that a detected value indicates a complete round shape while observing the detected value.

In step 102, the roundness of the reference cylinder is measured and the measurement result is recorded. Due to this, circular locus P is obtained and the position of V is calculated.

In step 103, by utilizing the moving mechanism provided to the mount base, the center of the reference cylinder is made eccentric with respect to the center of rotation by predetermined amount E.

In step 104, in an eccentric state, the roundness measurement of the reference cylinder is made and the measurement result is recorded. Due to this, egg-shaped locus S is obtained and the position of T is obtained and at the same time the position of V is confirmed.

In step 105, the difference between the position of T and the position of V, i.e., an amount of wear is calculated.

In step 106, whether the difference between the position of T and the position of V is smaller than a predetermined threshold value and if smaller, the procedure proceeds to step 107 and the operator is notified of that the amount of wear of the tip head is in an allowable range, and if larger, the procedure proceeds to step 108 and the operator is notified of that the amount of wear of the tip head exceeds the allowable range, and therefore is defective and a new tip head should be used.

The embodiments of the present invention have been explained above; however, various modifications can be made and for example, a correction is made in accordance with expressions in the first embodiment. However, it is also possible to make a correction using a table of correction values.

Industrial applicability

According to the present invention, because the roundness can be measured with high precision even when there is eccentricity, the workability of the surface roughness/shape measuring instrument is improved and the surface roughness/shape measuring instrument can be used in the field where it cannot be used because of productivity, and thus the field where the surface roughness/shape measuring instrument is used is extended.

**Claims**

1. A roundness measuring instrument comprising:

   a mount base that mounts and rotates an object to be measured having a circular section;
   a tip head having a spherical tip portion and capable of moving in a first plane including an axis of rotation of the mount base, which comes into contact with the surface of the object to be measured mounted on the mount base and moves in accordance with the rotation of the object to be measured;
   a measuring probe that detects the displacement of the tip head and outputs measurement data; and
   a processing controller that calculates the roundness of the object to be measured by processing the measurement data, wherein:

   the processing controller calculates the roundness of the object to be measured by correcting a shift due to eccentricity of the contact position of the surface of the object to be measured and the tip head in the first plane, which is a difference between the center of the circular section of the object to be measured and the center of rotation of the mount base; and
   the processing controller calculates the roundness of the object to be measured by calculating a shift due to eccentricity of the contact position of the surface of the object to be measured and the tip head in a direction perpendicular to the first plane and further correcting a shift of the contact position of the surface of the object to be measured and the tip head in the first plane due to the calculated shift in the direction perpendicular to the first plane.

2. A method of determining the quality of a tip head for determining the quality of the shape of a spherical tip portion of a tip head that comes into contact with the surface of an object to be measured in a roundness measuring instrument, the method comprising the steps of:

   measuring the outer shape of a reference object to be measured without eccentricity the shape of which is already known in a state where the reference object to be measured is mounted so that the center of a circular section of the reference object to be measured coincides with the center of rotation of a mount base;
   measuring the outer shape of the reference object to be measured with eccentricity in a state where the center of the circular section of the reference object to be measured is made eccentric from the center of rotation of the mount base by a predetermined amount;
   calculating an amount of deformation of the spherical tip head from a complete spherical form from a difference between the outer shape without eccentricity and the outer shape with eccentricity; and
   determining that the tip head is defective when the calculated amount of deformation is beyond a predetermined range.

# FIG.1

# FIG.2

FIG.3A

FIG.3B

FIG.4A

W          W

O'L        O'R

O

11

11

FIG.4B

W

O'U

O          O'S

11

W

FIG.4C

OU

O

W

C

O"

11

M

FIG.5

# FIG.6

# FIG.7

# FIG. 8A

# FIG. 8B

# FIG.9

```
          ┌─────────────┐
          │    START    │
          └─────────────┘
                 │
                 ▼
┌──────────────────────────────────┐
│   ARRANGE SO THAT CENTER OF       │      101
│   REFERENCE CYLINDER COINCIDES    │
│   WITH CENTER OF ROTATION         │
└──────────────────────────────────┘
                 │
                 ▼
┌──────────────────────────────────┐
│   MAKE MEASUREMENT OF ROUNDNESS   │      102
│   OF REFERENCE CYLINDER           │
└──────────────────────────────────┘
                 │
                 ▼
┌──────────────────────────────────┐
│   MAKE CENTER OF REFERENCE        │
│   CYLINDER ECCENTRIC FROM         │      103
│   CENTER OF ROTATION BY           │
│   PREDETERMINED AMOUNT            │
└──────────────────────────────────┘
                 │
                 ▼
┌──────────────────────────────────┐
│   MAKE MEASUREMENT OF ROUNDNESS   │      104
│   OF REFERENCE CYLINDER           │
└──────────────────────────────────┘
                 │
                 ▼
┌────────────────────────────────────────┐
│ CALCULATE DIFFERENCE BETWEEN MIDDLE     │
│ POSITION IN DIRECTION OF MAJOR AXIS     │   105
│ AND POSITION OF MAXIMUM DIAMETER IN     │
│ DIRECTION OF MINOR AXIS                 │
└────────────────────────────────────────┘
                 │
                 ▼
            106
         ╱─────────────╲              NO
        ╱ IS DIFFERENCE  ╲ ──────────────┐
        ╲ <THRESHOLD     ╱               │
         ╲ VALUE ?      ╱                │
          ╲───────────╱                 │
             │ YES                       │
             ▼                           ▼
   ┌──────────────────┐       ┌──────────────────┐
   │  TIP HEAD IS IN  │       │  TIP HEAD IS     │
   │  ALLOWABLE RANGE │       │  DEFECTIVE       │
   └──────────────────┘       └──────────────────┘
          107                        108
```

<table>
<tr><td colspan="2" align="center">**INTERNATIONAL SEARCH REPORT**</td><td colspan="2">International application No.<br>PCT/JP2006/324504</td></tr>
</table>

A.   CLASSIFICATION OF SUBJECT MATTER
*G01B5/20*(2006.01)i


According to International Patent Classification (IPC) or to both national classification and IPC

B.   FIELDS SEARCHED

Minimum documentation searched (classification system followed by classification symbols)
G01B5/00-7/34, G01B21/00-21/32



Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)



C.   DOCUMENTS CONSIDERED TO BE RELEVANT

| Category* | Citation of document, with indication, where appropriate, of the relevant passages | Relevant to claim No. |
|---|---|---|
| A | JP 4-329306 A (Tokyo Seimitsu Co., Ltd.),<br>18 November, 1992 (18.11.92),<br>Full text; all drawings<br>& US 5359784 A1 | 1,2 |
| A | JP 2001-91244 A (Tokyo Seimitsu Co., Ltd.),<br>06 April, 2001 (06.04.01),<br>Full text; all drawings<br>(Family: none) | 1,2 |
| A | JP 2004-93529 A (Tokyo Seimitsu Co., Ltd.),<br>25 March, 2004 (25.03.04),<br>Full text; all drawings<br>& DE 10340851 A1       & GB 2393790 A | 1,2 |

|☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    01 February, 2007 (01.02.07) | Date of mailing of the international search report<br>    13 February, 2007 (13.02.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/324504 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 5-269649 A (Okuma Corp.), 19 October, 1993 (19.10.93), Claim 1 (Family: none) | 2 |

Form PCT/ISA/210 (continuation of second sheet) (April 2005)

## INTERNATIONAL SEARCH REPORT

| | |
|---|---|
| International application No. | |
| | PCT/JP2006/324504 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The technical feature common to the inventions of claims 1, 2 relates to a circularity measuring device.  This technical feature cannot be a special technical feature within the meaning of PCT Rule 13.2, second sentence.

1. ☒ As all required additional search fees were timely paid by the applicant, this international search report covers all searchable claims.4

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable,
the      payment of a protest fee..

      ☐ The additional search fees were accompanied by the applicant's protest but the applicable protest fee was not paid within the time limit specified in the invitation.

      ☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4329306 A
- JP 2001091244 A
- JP 2004093529 A